Europäisches Patentamt

European Patent Office

Office européen des brevets

(19)

(11) Veröffentlichungsnummer : **0 068 519**
**B1**

(12) # EUROPÄISCHE PATENTSCHRIFT

(45) Veröffentlichungstag der Patentschrift :
17.07.85

(21) Anmeldenummer : 82200407.3

(22) Anmeldetag : 01.04.82

(51) Int. Cl.⁴ : **C 04 B 35/52**

---

(54) Verfahren zur Herstellung von Kohlenstofformkörpern.

---

(30) Priorität : 30.06.81 DE 3125609

(43) Veröffentlichungstag der Anmeldung :
05.01.83 Patentblatt 83/01

(45) Bekanntmachung des Hinweises auf die Patenterteilung : 17.07.85 Patentblatt 85/29

(84) Benannte Vertragsstaaten :
CH DE FR GB IT LI NL

(56) Entgegenhaltungen :
DE-A- 2 035 395
GB-A- 1 220 482
GB-A- 1 416 573
US-A- 3 309 437

(73) Patentinhaber : **Rütgerswerke Aktiengesellschaft**
**Mainzer Landstrasse 217**
**D-6000 Frankfurt a. Main 1 (DE)**

(72) Erfinder : **Glaser, Herbert**
**Schürenkampstrasse 22**
**D-4390 Gladbeck (DE)**
Erfinder : **Stolzenberg, Konrad, Dr.**
**Bahnhofstrasse 26**
**D-4355 Waltrop (DE)**

---

**Beschreibung**

Die Erfindung betrifft ein Verfahren zur Herstellung von Kohlenstofformkörpern ohne zusätzliche Bindemittel.

Derartige Kohlenstofformkörper werden industriell als Anoden für die Chloralkali-Elektrolyse, als Blockanoden für die Aluminium-Herstellung, als Elektroden für die Lichtbogen-Stahlwerksöfen und als Formteile für den Maschinen- und Apparatebau sowie der Elektrotechnik eingesetzt.

Qualitätsmerkmale für Kohlenstoffkörper sind : wahre Dichte, scheinbare Dichte, Festigkeiten, Temperaturbeständigkeit, elektr. Leitfähigkeit, Wärmeausdehnung, Porosität, Mikrostruktur, Gehalte an Spurenelementen, die je nach Anwendungsfall eine unterschiedliche Gewichtung haben.

Solche Formkörper werden nach der heute üblichen Technologie aus Koksen und Bindemitteln durch Mischen-Formen-Brennen hergestellt. Der Koks ist im allgemeinen ein kalzinierter Petrolkoks bzw. ein teilkalzinierter Pechkoks. Als Bindemittel werden Petrol- und Carbopeche mit Erweichungspunkt von ca. 100 °C verwendet. Die Formkörper müssen, um hohe Dichten zu erhalten, je nach Verwendungszweck bis zu dreimal imprägniert und nachgebrannt werden, ehe sie auf ihre Endabmessungen bearbeitet werden können.

In der Literatur sind auch Verfahren beschrieben, Formkörper ohne Bindemittelzusatz herzustellen.

Nach der DE-A-2 035 395 wird ein verkokbares Material mit flüchtigen Bestandteilen zwischen 8-10 % als Vorstufe für die Formkörperherstellung empfohlen. Verkokbare Materialien mit Restflüchtigen in dieser Größenordnung sind im allgemeinen Grünkokse, die bei Temperaturen um 500 °C hergestellt worden sind.

Der Grünkoks wird im kalten Zustand zerkleinert und danach in einem Temperaturbereich geeigneter Plastizität, vorzugsweise zwischen 350-450 °C, einer Kompression bei Drücken zwischen 1-4 · 10³ bar unterworfen.

Nach der Entformung erfolgt die Verkokung bei Temperaturen bis über 1 000 °C.

In den Bereichen wesentlicher Gasentwicklung zwischen 300-500 °C sowie 600-800 °C müssen kleine Temperaturgradienten gewählt werden, um Rißbildungen im Formkörper zu vermeiden. Nach der Graphitierung bei 2 500-3 000 °C, wo der Koks in Graphit umgewandelt wird, weisen die Formkörper im günstigsten Falle eine Porosität von ca. 25 % auf. Diese Porosität ist neben der Dichte des Körpers ein wesentliches Qualitätsmerkmal.

Ein ähnliches Verfahren zur Herstellung von Formkörpern auf der Basis eines Pechextraktes wird in GB-A-1 416 573 beschrieben. Thermisch vorbehandelte Peche mit Mesophasengehalten von 9,5-25 % werden mit organischen Lösungsmitteln wie Chinolin, Pyridin oder Teerölen in eine graphitierbare Phase, bestehend aus dispersen Mesophasensphäroliten und eine nicht graphitierbare Pechphase getrennt. Die Mesophasensphärolite haben Durchmessen von 1-100 μm und werden noch von etwa 10 % isotropem Pech umhüllt.

Bei einer gründlichen Pechabtrennung erhält man nach der Verkokung ein pulverförmiges Koksmaterial, das sich mit geeigneten Bindern zu quasi isotropen Formkörpern weiterverarbeiten läßt. Bei höheren Pechgehalten ist die Herstellung von Formkörpern auch ohne zusätzliche Bindemittel direkt möglich, weil das Restpech diese Aufgabe übernimmt. Erreichbare Formkörperdichten liegen zwischen 1,34 und 1,72 g/cm³.

Die beiden bisher beschriebenen Verfahren erfordern eine aufwendige Vorbehandlungsprozedur für das Einsatzmaterial, was eine wirtschaftliche Realisierung des Verfahrens für Massenprodukte uninteressant macht.

Ein vereinfachtes Verfahren zur Herstellung von Kohlenstoffkörpern aus pechartigen Kohlenwasserstoffsubstanzen ohne zusätzliche Verwendung von Bindemitteln wird in der japanischen Zeitschrift Tanso 1968, Heft 52, Seiten 13-17, beschrieben.

Danach wird ein modifiziertes Hartpech mit Erweichungspunkt über 170 °C mit der 5-6-fachen Menge einer Wasser-Äthylalkohol-Mischung in einer Kugelmühle zu Schlicker (Schlamm) zerkleinert und gemischt. Diesen Schlicker gibt man nach der gleichen Methode in eine vorgefertigte Gipsform, wie es aus der Porzellanindustrie bekannt ist. Das Wasser zieht in den Gips und eine zurückbleibende max. 5 mm dicke Schicht aus feindispersem Pech löst sich von der Form ab.

Vor der Stabilisierung der « grünen » Formkörper können diese einer Druckbehandlung unterzogen werden, wodurch die Dichte des fertigen Kokskörpers erhöht und seine Porosität reduziert wird. Die Stabilisierung des « grünen » Pechformkörpers erfolgt durch ein Unschmelzbarmachen, z. B. in einer Ozonatmosphäre, bei Temperaturen um den Erweichungspunkt. Nach der anschließenden Carbonisierung erhält man Formkörper mit Porositäten zwischen 50 und 90 % bei Formkörperdichten zwischen 1,45 und 0,75 g/cm³.

Auch bei diesem Verfahren wird während der Sinterungsphase der Einzelpartikel ein geringer Temperaturanstieg empfohlen, um Verformungen des Körpers durch erhöhte Entgasungsgeschwindigkeit zu vermeiden. Die Mikrostruktur eines auf diese Weise hergestellten Formköpers ist isotrop und die übrigen physikalischen Eingenschaften sind sehr stark von der Herstellungsart für das modifizierte Hartpech, wie z. B. Destillieren oder Verblasen mit Luft, abhängig.

Aufgabe der Erfindung ist es, aus hochsiedenden, kohle- oder mineralölstämmigen, aromatischen Kohlenwasserstofffraktionen mit hohem Verkokungsrückstand unter Umgehung der Zwischenstufen direkt großformatige, anisotrope Kohlenstofformkörper ohne Aufwendung hoher Drücke auf einfache Weise herzustellen.

Die Aufgabe wurde erfindungsgemäß dadurch gelöst, daß Kohlenwasserstofffraktionen mit einem Erweichungspunkt über 40 °C (Krämer-Sarnow) im flüssigen oder gemahlenen Zustand in Formen gefüllt, im ersten Schritt bis zur vollständigen Umwandlung in Grünkoks bis max. 550 °C und danach in einem zweiten Schritt linear einer Aufheizgeschwindigkeit von etwa

$$1,2 \cdot [(1/d^2) \, (K/Tag)]$$

in Abhängigkeit vom Formkörperdurchmesser d[m] aufgeheizt werden bis auf etwa 800 °C, wobei der Temperaturverlauf zwischen dem ersten und dem zweiten Aufheizschritt durch einen Übergangsbogen ausgeglichen ist, und daß der so hergestellte Formkörper bei mindestens 850 °C gebrannt, entformt und graphitiert wird.

Als Rohstoff werden vorzugsweise Kohlenwasserstofffraktionen mit einem Gehalt an in Chinolin unlöslichen Bestandteilen von nicht mehr als 1 % verwandt, die als Destillationsrückstand bei der Aufarbeitung von Steinkohlenteer oder von hocharomatischen Rückständen der Dampfspaltung von Mineralölfraktionen gewonnen werden. Insbesondere finden Hartpeche mit einem Erweichungspunkt (KS) über 100 °C Verwendung.

Um die Maßhaltigkeit des Formkörpers sicherzustellen, ist ein Schwindmaß von 5 % zu berücksichtigen. Der erste Aufheizschritt umfaßt zwei Stufen. In der ersten Stufe wird das in die Formen gefüllte Hartpech bis zu Beginn der Mesophasenbildung aufgeheizt.

In der sich anschließenden zweiten Stufe entstehen bei weiterer Aufheizung aufgrund zwischenmolekularer Kräfte aus der isotropen Pechschmelze anisotrope verformbare Flüssigkristalle, die seogenannte Mesophase. Bei weiterem raschem Temperaturanstieg erstarrt die Mesophase zu Grünkoks. Während der Verkokung der Mesophase zu Grünkoks entstehen als Folge der Kondensationsreaktionen Spaltprodukte, die als Gas- oder Dampfblasen durch die anisotrope, allmählich erstarrende Mesophase entweichen. Die aufsteigenden Blasen erzeugen an ihren Phasengrenzen zur Mesophase Schubspannungen, die der Mesophase eine nadelförmige Textur in Richtung der aufsteigenden Blasen aufzwingt. Diese Formkraft wird um so größer, je schneller das Aufheizen und damit das Entgasen erfolgt. Bei einer senkrecht stehenden zylindrischen Kokille ist dies die axiale Richtung. In dieser Orientierungsrichtung werden nach der Graphitierung die höchsten Festigkeitswerte und die besten elektrischen Leitwerte erreicht. Bei thermischer Belastung treten keine inneren Spannungen in axialer Richtung des Formkörpers auf, da die erstarrte Mesophase über das gesamte Formkörpervolumen eine nahezu gleiche Orientierung aufweist.

Vor der Entnahme des Formkörpers aus seiner Form kann nach Wunsch eine Imprägnierung durchgeführt werden. Diese kann nach dem erfinderischen Verfahren in einem oder mehreren Schritten erfolgen. Dazu füllt man das Imprägnierpech vorzugsweise auf die Oberfläche des in der Form erstarrten porösen Koksformkörpers, nachdem vorher seine Temperatur auf 300-420 °C gesenkt wurde. Vorzugsweiser Temperaturbereich für die Imprägnierung ist je nach verwendetem Imprägnierpech z. B. 300-370 °C. Aufgrund der Schwerkraft kann das Imprägnierpech mühelos in das von wenigen groben offenen Poren gebildete Kapillarsystem eindringen, was während der ersten Verkokung gebildet worden ist. Danach wird der imprägnierte Formkörper gemäß Stufe 2 des beanspruchten Verfahrens erneut behandelt.

Das Herauslösen der Koksformkörper aus der Form geschieht nach dem erfinderischen Verfahren durch weiteres Aufheizen bis zu einer Temperatur, bei der der Kokskörper schrumpft. Das Schrumpfen erreicht ein Maximum bei etwa 800 °C. Diese Temperatur muß daher sehr sorgfältig angesteuert werden, um die auftretenden Schrumpfspannungen nicht über die maximalen Zugspannungen steigen zu lassen. Zu schnelles Aufheizen führt zu Radialrissen, die den Formkörper für eine Verwendung als Elektrode unbrauchbar machen.

Zur Herstellung von Kohlenstofformkörpern nach dem erfinderischen Verfahren ist, wie beschrieben, eine Aufheizkurve erforderlich, die aus zwei Abschnitten besteht :

Im ersten Abschnitt der Aufheizkurve (Stufe 1 und Stufe 2), die bis etwa 550 °C reicht, wird die Grünkoksbildung abgeschlossen.

Die Aufheizkurve liegt bei $T = a \cdot \tau^n$

(Temperatur T [°C] und Zeit $\tau$ [h])

vorteilhaft zwischen :

$50 < a < 150$ vorzugsweise 80-100

$0,30 < n < 0,70$ vorzugsweise 0,5-0,6 vorwiegend bei unterschiedlichen Rohstoffen.

Aufheizkurven, die davon abweichen, sind möglich. Jedoch wird bei zu schnellem Aufheizen die Porosität des Formkörpers unerwünscht hoch und bei zu langsamen Aufheizen ist der produzierte Gasvolumenstrom zu klein, wodurch keine ausgeprägte Kristallausrichtung entsteht.

Der zweite Abschnitt der Aufheizkurve hat einen angenähert linearen Verlauf. Die Steigung der Aufheizgeraden ist nur vom Durchmesser des Formkörpers abhängig und hat etwa folgende Größenordnung :

0 068 519

d = 0,1 m → dT/dτ ≈ 120 °C/d
d = 0,2 m → dT/dτ ≈ 30 °C/d
d = 0,4 m → dT/dτ ≈ 8 °C/d
d = 0,8 m → dT/dτ ≈ 2 °C/d

Die auftretende Unstetigkeitsstelle zwischen den beiden Aufheizkurven wird zweckmäßigerweise durch einen Übergangsbogen ausgeglichen.

Die notwendigen Aufheizgeschwindigkeiten ergeben Herstellungszeiten, die bei größen Formkörperabmessungen denen bei konventioneller Verfahrensweise gleichwertig sind. Bei kleineren Formkörperabmessung sind nach dem erfinderischen Verfahren kürzere Brennzeiten möglich.

Die Erfindung wird anhand der folgenden Beispiele näher erläutert, ohne sie hiermit einzuschränken.

Beispiel 1

Ein zylindrischer Metallbehälter mit glatter Innenfläche und Ø = 120 mm wird mit einem Pech gefüllt, das aus dem Pyrolyserückstand der Dampfspaltung von Rohbenzin durch Destillation gewonnen wurde und folgende Merkmale aufweist.

EP (KS) : 120 °C
QI : 0,3 %
TI : 22 %
Asche : —

Die Aufheizkurve beträgt :

20-550 °C in 15 h
Verkokungsphase mit nadelförmiger Textur der Mesophasenkristalle in axialer Richtung
550-630 °C in 20 h
630-830 °C in 50 h
das Schrumpfmaß beträgt 5 %.
abkühlen in 25 h.

In 110 h entsteht ein rißfreier Koksformkörper, der sich durch einfaches Umstülpen der Form entnehmen läßt.

Die Kohlenstoffausbeute beträgt 88 %.
Die Porosität beträgt 32 %. Die Nadeltextur in axialer Richtung ist ausgeprägt.
Der Koksformkörper läßt sich in herkömmlicher Weise graphitieren.
Die Abkürzungen bedeuten :

EP (KS) = Erweichungspunkt (Krämer Sarnow)
QI = Chinolinunlösliches
TI = Toluolunlösliches

Beispiel 2

Eine Metallkokille mit Ø = 400 mm wird mit einem dest. Hartpech aus separiertem Steinkohlenteerpech (EP 160 °C) gefüllt.

Die Aufheizkurve beträgt :

20-550 °C in 18 h Der Koksformkörper besitzt nach der Temperaturbehandlung eine Porosität von 35 %.
550-400 °C in 10 h abkühlen
400 °C in 6 h Durch die Zugabe von dest. Hartpech (EP 160 °C) auf die obere Entgasungsfläche wird die Porosität des Formkörpers gesenkt.
400-550 °C in 10 h Das zugegebene Imprägnierpech wird verkokt und enthält die gleichen axialen Kristallstrukturen wie das primär verkokte Material.
550-630 °C in 60 h
630-830 °C in 350 h
830- 20 °C in 100 h

In 554 h

entsteht ein rißfreier Koksformkörper mit Ø 375 mm, der sich durch Umstülpen aus der Form entnehmen läßt.

4

Die Porosität des gebrannten Formkörpers beträgt 16 %.
Der Formkörper läßt sich herkömmlich graphitieren.

Beispiel 3

Eine zylindrische Metallform mit $\varnothing = 630$ mm wird im Verhältnis 1 : 1 mit filtriertem Steinkohlenteernormalpech und einem Rückstandsöl aus der Äthylenpyrolysegefüllt (EP ca. 40 °C).

Die Aufheizkurve beträgt :

```
 20-530 °C in    24 h
530-350 °C in    15 h
    350 °C in    10 h 1. Imprägnieren mit filtriertem Steinkohlenteernormalpech (EP 72 °C)
350-530 °C in    15 h
530-350 °C in    15 h 2. Imprägnieren mit filtriertem Steinkohlenteernormalpech.
    350 °C in    10 h
350-530 °C in    18 h
530-630 °C in   120 h
630-830 °C in 1 900 h
830- 20 °C in   200 h
              ─────────
          In 2 327 h
```

entsteht ein Koksformkörper mit $\varnothing = 600$ mm.

Die Porosität beträgt 13 %.
Der Formkörper läßt sich herkömmlich graphitieren.
Die nachfolgenden Tabellen sollen die Vorteile des erfinderischen Verfahrens gegenüber konventioneller Technik am Beispiel der Elektrodenfertigung aufzeigen.

Verfahrensgleich

| Prozeßstufe | Konventionelle Technologie | erfinderisches Verfahren |
|---|---|---|
| Kokserzeugung | DC-Prozess :<br>— Verkokung<br>— Koks abkühlen<br>— Koks ausbauen<br>— Koks vorbrechen<br>— Koks kalzinieren | entfällt |
| grüne Formkörper herstellen | — Kalz. Koks brechen und klassieren<br>— Granulometrie herstellen und Binde-pech untermischen<br>— grüne Körper formen | entfällt<br><br>Metallkokille bereitstellen und mit festem oder flüssigem Einsatzmaterial füllen |
| Brennen | — 1. Brennprozess (ca. 4 Wochen)<br>— 1. Vakuum-Druck-Imprägnierung (Pech EP 50-70 °C)<br>— 2. Brennprozess (ca. 2 Wochen)<br><br>— Putzen der Oberfläche von Rückständen<br>— 2. Vakuum-Druck-Imprägnierung<br>— 3. Brennprozess (ca. 2 Wochen) | — 1. Verkokung (ca. 1 Tag)<br>— 1. Imprägnierung (Pech EP 120-170 °C)<br>— 2. Verkokung (ca. 0,5 Tage)<br>— Brennprozess (ca. 850 °C)<br><br>entfällt<br>— aus der Form entnehmen |
| Graphitieren | | — beschleunigtes Aufheizen wegen des geringen elektr. Widerstandes bei hoher Orientierung des polykristallinen Kokskörpers |
| mechanisches Bearbeiten | identisch | |

Vorteile des erfinderischen Verfahrens

| Konventionelle Technologie | erfinderisches Verfahren |
|---|---|
| Nachteile : | Vorteile : |
| | Der gesamte DC-Prozess entfällt. |
| — Der Formkörper enthält einen großen Anteil verschlossener unzugänglicher Poren, die nicht imprägniert werden können. | — Der Formkörper hat ein durchgehendes Porensystem in Richtung der aufsteigenden Gasblasen, bestehend aus wenigen großen Poren. |
| — Die Porenstruktur ist sehr unregelmäßig, deshalb müssen sehr dünnflüssige Imprägnierpeche mit niedrigen Viskositäten verwendet und die Imprägnierung unter Druck durchgeführt werden. | — Die gleichmäßige grobe Porenstruktur mit glatten Porenwänden erlaubt die Verwendung von Imprägnierpechen mit hohem Erweichungspunkt und damit hohem Verkokungsrückstand. |
| — Nach jedem Imprägnierschritt müssen Rückstände von der Oberfläche entfernt werden. | — Das Putzen entfällt. |
| — Zwischen den Brennstufen wird der Formkörper immer auf Umgebungstemperatur abgekühlt. | — Die Temperaturänderungen zum Imprägnieren betragen nur ca. 200 °C. |

Vergleich der Elektrodeneigenschaften

| | Konventionelle Technologie | erfinderisches Verfahren |
|---|---|---|
| optische Eigenschaften | Die Elektroden sind mikroskopisch anisotrop und makroskopisch isotrop bis schwach anisotrop | — Mikroskopisch liegt eine axiale Kristallausrichtung vor.<br>— Makroskopisch ergibt sich ein hoch anisotroper Kohlenstoffkörper |
| physikalische Eigenschaften | | |
| WAK $\parallel$ | $0,5 \cdot 10^{-6}$ | $1 \cdot 10^{-8}$ |
| $\perp$ | $2,4 \cdot 10^{-6}$ | $2,5 \cdot 10^{-6}$ |
| el. Wider- $\rho \parallel$ [$\Omega$ $\mu$m] | 11 | 3,3 |
| stand $\perp$ | 11 | 20 |
| Rohdichte | 1,57 | 1,56 |
| Biegefestigkeit | | |
| $\parallel$ | 8 N/mm² | 15 N/mm² |
| $\perp$ | 4 N/mm² | 4 N/mm² |
| Druckfestigkeit $\parallel$ | 14 N/mm² | 20 N/mm² |
| $\perp$ | 15 N/mm² | 15 N/mm² |

## Patentansprüche

1. Verfahren zur Herstellung anisotroper Kohlenstofformkörper aus hochsiedenden Kohle- oder mineralölstämmigen aromatischen Kohlenwasserstofffraktion mit hohem Verkokungsrückstand ohne zusätzliches Bindemittel und ohne Anwendung hoher Drücke, dadurch gekennzeichnet, daß Kohlenwasserstofffraktionen mit einem Erweichungspunkt über 40 °C (Krämer-Sarnow) im flüssigen oder gemahlenen Zustand in Formen gefüllt, im ersten Schritt bis zur vollständigen Umwandlung in Grünkoks bis max. 550 °C und danach in einem zweiten Schritt linear mit einer Aufheizgeschwindigkeit von etwa

$$1,2/d^2 \ \text{K/Tag}$$

in Abhängigkeit vom Formkörperdurchmesser d(m) aufgeheizt werden bis auf etwa 800 °C, wobei der Temperaturverlauf zwischen dem ersten und dem zweiten Aufheizschritt durch einen Übergangsbogen

6

ausgeglichen ist, und daß der so hergestellte Formkörper bei mindestens 850 °C gebrannt, entformt und graphitiert wird.

2. Verfahren nach Anspruch 1, dadurch gekennzeichnet, daß als Kohlenwasserstofffraktionen Destillationsrückstände von der Aufarbeitung von Steinkohlenteer oder hocharomatischen Pyrolyse-Rückständen der Dampfspaltung von Mineralölfraktionen verwandt werden.

3. Verfahren nach Anspruch 2, dadurch gekennzeichnet, daß die Destillationsrückstände einen Erweichungspunkt von mehr als 100 °C (Krämer-Sarnow) und einen Gehalt an in Chinolin unlöslichen Bestandteilen von nicht mehr als 1 % haben.

4. Verfahren nach den Ansprüchen 1 bis 3, dadurch gekennzeichnet, daß die Formen mit einem Schwindmaß von ca. 5 % hergestellt werden.

5. Verfahren nach den Ansprüchen 1 bis 4, dadurch gekennzeichnet, daß die Aufheizkurve für den Ersten Aufheizschritt bis maximal 550 °C durch die Funktion

$$T = a \cdot \tau^n$$

gegeben ist, wobei T die Temperatur in °C und $\tau$ die Zeit in Stunden bedeuten, und die Konstante a im Bereich von 50 bis 150, vorzugsweise 80 bis 100, und der Exponent n im Bereich 0,3 bis 0,7, vorzugsweise 0,5-0,6 liegt.

6. Verfahren nach den Ansprüchen 1 bis 5, dadurch gekennzeichnet, daß der Formkörper nach dem ersten Aufheizschritt bei 300 bis 420 °C mit einem Pech, das vorzugsweise einen Erweichungspunkt (KS) von 120 bis 170 °C hat, imprägniert wird, indem das erhitzte flüssige Pech in den oberen freien Teil der Form gegossen wird und allein unter Einwirkung der Schwerkraft in den Formkörper eindringt, und der Formkörper noch einmal auf maximal 550 °C erhitzt wird, um das Imprägnierpech zu verkoken, wobei diese Imprägnierung gegebenenfalls wiederholt wird.

**Claims**

1. A process for the manufacture of anisotropic molded carbon bodies from high-boiling aromatic hydrocarbon fractions derived from coal or mineral oil and having a high coking residue, without any additional binding agent and without using high pressures, characterised by filling molds with hydrocarbon fractions having a softening point in excess of 40 °C (Krämer-Sarnow) in a liquid or milled state, heating said fractions in the first step, until they are completely converted to greencoke, up to a maximum of 550 °C and thereafter in a second step at a linear heating rate of approximately

$$1{,}2/d^2 \text{ K/day}$$

which is a function of the diameter d(m) of the molded body, up to approximately 800 °C, wherein the change of temperatur between the first and the second heating-step is equalized by a transition curve, and by burning at a temperature not less than 850 °C, removing from the mold and graphitizing the molded body, manufactured in this manner.

2. The process as claimed in claim 1, wherein the distillation residues from the working-up of coal tar or highly aromatic pyrolysis residues from the steam cracking of mineral oil fractions are used as hydrocarbon fractions.

3. The process as claimed in claim 2, wherein the distillation residues have a softening point in excess of 100 °C (Krämer-Sarnow) and a content of quinoline insoluble matter which does not exceed 1 %.

4. The process as claimed in one of the claims 1 to 3, wherein the molds are manufactured with a shrinkage dimension of approximately 5 %.

5. The process as claimed in one of the claims 1 to 4, wherein the heating curve of the first heating step up to a maximum of 550 °C is defined by the function :

$$T = a \cdot \tau^n$$

in which T denotes the temperature in °C and $\tau$ the time in hours, while the constant a is the range from 50 to 150, preferably from 80 to 100, and the exponent n is in the range from 0,3 to 0,7, preferably from 0,5 to 0,6.

6. The process as claimed in one of the claims 1 to 5, characterised by impregnating the molded body after the first heating step at a temperature range from 300 to 420 °C with a pitch which preferably has a softening point (KS) of 120 to 170 °C, in that the heated, liquid pitch is poured in the upper open part of the mold and penetrates solely under action of gravity into the modled body, and heating the molded body again to a maximum temperature of 550 °C to coke the impregnating pitch, wherein this impregnation is optionally repeated.

**Revendications**

1. Procédé pour fabriquer, sans avoir recours à un liant supplémentaire et sans opérer sous des pressions élevées, des objets moulés anisotropes en carbone, à partir de fractions d'hydrocarbures aromatiques, provenant du charbon ou du pétrole, qui ont des températures d'ébullition élevées et donnent un important résidu à la cokéfaction, procédé caractérisé en ce qu'on introduit dans des moules des fractions d'hydrocarbures à point de ramollissement supérieur à 40 °C (Krämer Sarnow), à l'état liquide ou à l'état broyé, on chauffe dans une première étape jusqu'à transformation complète en coke vert, c'est-à-dire jusqu'à une température d'au plus 550 °C, puis, dans une seconde étape, on chauffe linéairement à une vitesse de chauffage d'environ :

$$1{,}2 \cdot [(1/d^2)\ (K/jour)]$$

qui est fonction du diamètre d (en mètres) de l'objet moulé, cela jusqu'à une température d'environ 800 °C, et, éventuellement après avoir imprégné une ou plusieurs fois de brai l'objet moulé ainsi fabriqué, on le cuit à au moins 850 °C, on le démoule et on le graphitise.

2. Procédé selon la revendication 1, caractérisé en ce qu'on utilise, comme fractions d'hydrocarbures, des résidus de distillation provenant du traitement de goudrons de houille ou du traitement de résidus, à haute teneur en aromatiques, du vapocraquage de fractions de pétrole.

3. Procédé selon la revendication 2, caractérisé en ce que les résidus de distillation ont un point de ramollissement supérieur à 100 °C (Krämer-Sarnow) et une teneur en constituants insolubles dans la quinoléine au plus égale à 1 %.

4. Procédé selon l'une quelconque des revendications 1 à 3, caractérisé en ce que les moules sont fabriqués avec une cote de retrait d'environ 5 %.

5. Procédé selon l'une quelconque des revendications 1 à 4, caractérisé en ce que la courbe de chauffage est donnée par la fonction :

$$T = a \cdot \tau^n$$

dans laquelle T représente la température en degrés C, $\tau$ représente le temps en heures, la constante a est située dans l'intervalle allant de 50 à 150, de préférence de 80 à 100, et l'exposant n est situé dans l'intervalle allant de 0,3 à 0,7, de préférence de 0,5 à 0,6.

6. Procédé selon l'une quelconque des revendications 1 à 5, caractérisé en ce qu'on imprègne l'objet moulé, à une température de 300 à 420 °C, avec un brai dont le point de ramollissement (KS) est de préférence compris entre 120 et 170 °C, imprégnation que l'on réalise en coulant le brai liquide chauffé dans la partie libre supérieure du moule et en le laissant pénétrer dans l'objet moulé simplement sous l'action de la gravité.